**Europäisches Patentamt**

**European Patent Office**

**Office européen des brevets**

(19)

(11) Numéro de publication : **0 071 553**
**B1**

(12) **FASCICULE DE BREVET EUROPÉEN**

(45) Date de publication du fascicule du brevet :
**11.12.85**

(51) Int. Cl.⁴ : **C 01 B 23/00, B 01 D 53/04**

(21) Numéro de dépôt : **82430018.0**

(22) Date de dépôt : **02.07.82**

(54) **Procédé et installation d'épuration de l'hélium contenu dans un mélange de gaz.**

(30) Priorité : **28.07.81 FR 8114809**

(43) Date de publication de la demande :
**09.02.83 Bulletin 83/06**

(45) Mention de la délivrance du brevet :
**11.12.85 Bulletin 85/50**

(84) Etats contractants désignés :
**AT BE CH DE FR GB IT LI LU NL SE**

(56) Documents cités :
**DE-A- 2 343 313**
**DE-A- 2 624 346**
**DE-A- 2 702 784**
**DE-C- 832 600**
**FR-A- 1 265 127**
**FR-A- 1 274 945**
**FR-A- 2 052 692**
**FR-A- 2 128 896**
**GB-A- 1 444 231**
**US-A- 3 085 379**
**CHEMICAL ABSTRACTS, vol.82, no.26, 30 juin 1975, page 124, résumé no.173062t, Columbus, Ohio (US) G. BIRD et al.: "Separation of nitrogen from helium using pressure-swing adsorption"**
**HARTMUT VON KIENLE/ERICH BADER "Aktivkohle und Ihre industrielle Anwendung", Ferdinand Enke Verlag, 1980, Stuttgart (DE), pages 118-122**
**ULLMANNS ENCYKLOPÄDIE DER TECHNISCHEN CHEMIE, vol.2, édition 4, 1972, Verlag Chemie GmbH, Weinheim (DE), pages 603-611**

(73) Titulaire : **COMPAGNIE MARITIME D'EXPERTISES S.A. Société Anonyme dite:**
**Avenue de la Soude**
**F-13009 Marseille (FR)**

(72) Inventeur : **Avon, Michel**
**1, Chemin de la Pastissière**
**F-13620 Carry-le-Rouet (FR)**
Inventeur : **Markarian, Gérard**
**35, Boulevard Roume**
**F-13013 Marseille (FR)**

(74) Mandataire : **Moretti, René et al**
**C/O Cabinet BEAU DE LOMENIE 14, rue Raphaël**
**F-13008 Marseille (FR)**

Jouve, 18, rue St-Denis, 75001 Paris, France

## Description

La présente invention a pour objet un procédé et un dispositif pour purifier l'hélium contenu dans un mélange de gaz.

Le secteur technique de l'invention est celui des matériels et procédés pour l'épuration des gaz, notamment des gaz respiratoires utilisés dans le domaine de la plongée sous-marine.

On connaît actuellement deux moyens pour obtenir l'épuration des gaz notamment des gaz respiratoires pour capter les impuretés qu'ils contiennent en vue de l'épuration de l'hélium.

Selon un premier moyen dit cryogénique, on capte les impuretés à très basse température, par exemple de l'ordre de − 170°, en utilisant de l'azote liquide. Un tel procédé est décrit dans le brevet FR-A-1 265 127 (N.V. PHILIPS GLOEILAMPENFABRIEKEN), lequel procédé se caractérise par le fait que le mélange de gaz est conduit à travers un agent adsorbant fortement refroidi dans un bain de gaz liquéfié, lequel agent est par exemple du charbon activé ou un gel de silice. Cette technique donne de bons résultats mais nécessitant un approvisionnement en azote liquide sur le chantier, n'est pas toujours très pratique ni rentable selon les cas d'utilisation, par exemple lorsqu'il s'agit d'approvisionner une unité située en mer pour la mise en œuvre de travaux sous-marins au cours desquels une grande quantité de gaz respiratoires est consommée.

On connaît également un autre procédé décrit dans le brevet US-A-3 085 379 (KIYONAGA & A1) concernant la purification des gaz légers, tels que l'hélium sur des tamis moléculaires zéolitiques à une température de − 40 °C, sous une pression comprise entre environ 13 et 30 bars.

La publication HARTMUT VON KIENLE/ERICH BADER « Aktivkohle und ihre industrielle Anwendung » est relative à la séparation de deux gaz permanents par adsorption de charbon microporeux dont les pores sont de dimensions comprises entre 0,5 et 0,7 nm.

Ce document donne des considérations générales sur la séparation de deux gaz d'un mélange dans un procédé de désorption par variation de pression.

Selon un deuxième moyen, on épure le gaz par adsorption à la température ambiante. Ce procédé, bien qu'intéressant au niveau de sa mise en œuvre, n'a jamais donné jusqu'à ce jour de bons résultats.

La présente invention vise à remédier aux inconvénients des procédés actuellement connus et a pour objectif de solutionner la question relative à l'épuration de l'hélium contenu dans un mélange gazeux en mettant en application une technique nouvelle utilisant le froid mais ne nécessitant pas un approvisionnement en azote liquide sur le lieu d'exploitation et mettant en œuvre des moyens pour se rapprocher de la technique dite à température ambiante, tout en en améliorant le fonctionnement pour rendre cette technique efficace sur le plan industriel.

Cet objectif est atteint par le procédé d'épuration de l'hélium contenu dans un mélange de gaz mettant en œuvre une unité de pré-traitement pour retenir les impuretés telles que l'eau, le gaz carbonique et les composants organiques lourds et au moins un réacteur du type chromatographique, situé en aval de ladite unité de pré-traitement, lequel se caractérise par les opérations suivantes :

a) on ajuste la pression du mélange de gaz jusqu'à obtenir la pression de travail de la phase d'adsorption, cette pression étant comprise entre 12 et 15 bars ;

b) on envoie le mélange de gaz dans ledit réacteur et on le fait passer à travers un adsorbant constitué par un charbon micro-poreux dont les pores sont de dimensions inférieures ou égales à 2 nanomètres ;

c) on amène la température dudit mélange à la sortie de ladite unité de pré-traitement jusqu'à ce qu'elle se situe dans la fourchette comprise entre − 15 °C et − 35 °C, de préférence − 25 °C et,

d) après la phase d'adsorption, on commande la décompression du mélange de gaz par mise à l'atmosphère dudit réacteur au terme de laquelle phase de décompression, on crée une dépression dans ledit réacteur jusqu'à atteindre un vide inférieur ou égal à 1,33 millibar pour régénérer le charbon micro-poreux.

Selon ce procédé, d'abord on décomprime la quantité résiduelle de mélange de gaz contenu dans ledit réacteur jusqu'à atteindre une pression comprise entre 1 et 5 bars, de préférence 3 bars et au cours de cette décompression, on envoie le mélange de gaz dans un réservoir de stockage et ensuite, après avoir atteint cette pression, on purge ledit réacteur pour rejeter à l'atmosphère la quantité de mélange trop riche en impuretés, puis on fait le vide dans ledit réacteur.

Selon ledit procédé dans lequel on met en œuvre trois réacteurs reliés entre eux et pouvant être mis séparément en communication avec les autres appareillages de l'installation ou être isolés desdits appareillages par des vannes pour une épuration en continu de l'hélium, et pour un cycle opératoire, on effectue les étapes suivantes :

A a) on pressurise le réacteur R1 avec le mélange de gaz mis à ladite pression de travail pendant un temps $t_1$ ;

b) au terme de cette phase de pressurisation, on poursuit la phase d'adsorption en faisant circuler le mélange de gaz dans le réacteur R1 et l'on maintient l'adsorption pendant une période $T_1$ ;

c) au terme de la phase d'adsorption, on décomprime le mélange de gaz pendant un temps $t_2$ ;

d) au terme de la phase de décompression, on crée une dépression dans le réacteur R1 que l'on maintient pendant une période $T_2$ pour régénérer le charbon micro-poreux ;

e) au terme de la phase de régénération, on recommence un nouveau cycle en comprimant le mélange de gaz à ladite pression de travail pendant un temps $t_1$.

B a) Simultanément et avant le terme de la phase d'adsorption Ab) du réacteur R1, on comprime le mélange de gaz à ladite pression de travail pendant temps $t_1$ qui se termine avec la fin de la phase d'adsorption dudit réacteur R1 :

b) au terme de cette phase de compression, on poursuit la phase d'adsorption en envoyant le mélange de gaz dans le réacteur R2 et l'on maintient l'adsorption pendant une période $T_1$ ;

c) on effectue ensuite les opérations Ac) ; Ad) ; Ae) sur le réacteur R2 de la même façon que sur le réacteur R1.

C a) Simultanément et avant le terme de la phase d'adsorption Bb) du réacteur R2, on comprime le mélange de gaz à ladite pression de travail pendant un temps $t_1$ qui se termine avec la phase d'adsorption dudit réacteur R2 ;

b) au terme de cette phase de compression, on poursuit la phase d'adsorption en envoyant le mélange de gaz dans le réacteur R3 et l'on maintient l'adsorption pendant une période $T_1$ ;

c) on effectue ensuite les opérations Ac) ; Ad) ; Ae) sur le réacteur R3 de la même façon que sur le réacteur R1 ;

— les phases d'adsorption Bb) du réacteur R2 et Cb) du réacteur R3 se produisant successivement dans le même temps au cours duquel se produisent les opérations Ac) de décompression du mélange gazeux ; Ad) de régénération du charbon micro-poreux ; et Ae) de compression dudit mélange effectuées sur le réacteur R1 ;

— et on poursuit le processus avec les trois réacteurs R1/R2/R3.

Une installation pour l'épuration de l'hélium contenu dans un mélange de gaz respiratoire hyperbare comportant une unité de prétraitement comprenant au moins un filtre contenant un adsorbant et/ou un absorbant dont la sortie est reliée à l'entrée d'au moins un réacteur chromatographique, à la sortie duquel l'hélium purifié est envoyé par l'intermédiaire d'un surpresseur dans une unité de stockage à haute pression, se caractérise par le fait que le mélange de gaz comprimé issu de l'unité de pré-traitement est envoyé dans un dispositif échangeur comprenant un économiseur et un refroidisseur, lui-même relié à un groupe frigorifique, lequel dispositif est situé en aval de ladite unité de pré-traitement et en amont dudit réacteur pour mettre le mélange de gaz à la température de travail de la phase d'adsorption, laquelle température est comprise dans la fourchette − 15 °C à − 35 °C, de préférence − 25 °C.

Dans une installation dont le réacteur chromatographique adopte la forme d'une tour cylindrique et comporte une grille inférieure et une grille supérieure qui délimitent avec la paroi de la tour l'adsorbant, le diamètre interne du réacteur est au plus le 1/3 de la distance qui sépare lesdites grilles.

Le résultat de l'invention est l'épuration de l'hélium contenu dans un mélange de gaz par élimination des polluants organiques, le gaz carbonique et l'eau et l'ajustement des concentrations en azote et en oxygène dans un mélange gazeux.

Une application du procédé et de l'installation selon l'invention est la récupération de l'hélium à partir des poches de gaz naturel.

Une autre application de l'invention est l'épuration de l'hélium contenu dans les mélanges de gaz respiratoires utilisés dans le cadre des travaux sous-marins en plongée profonde.

Un avantage de l'invention est qu'elle permet de réaliser l'épuration de l'hélium par rétention sélective des composés non désirables en utilisant un adsorbant micro-poreux, dans un réacteur chromatographique sous pression et à basse température, de l'ordre de − 25 °C produite par des groupes frigorifiques industriels couramment utilisés.

La technique selon l'invention est intéressante du fait qu'elle permet d'être appliquée à terre comme en mer avec les moyens énergétiques existant sur les chantiers sans avoir à mettre en œuvre des techniques nécessitant des approvisionnements en containers spéciaux onéreux et peu pratiques à acheminer sur le chantier tel que par exemple l'azote liquide nécessaire pour appliquer les techniques d'épuration cryogéniques de l'hélium.

D'autres avantages et les caractéristiques de l'invention ressortiront encore à la lecture de la description suivante des moyens mis en œuvre pour l'application du procédé et de l'installation d'épuration de l'hélium, objet de la présente demande, en référence au dessin annexé sur lequel :

la figure 1 est un schéma d'une installation de marche en continu pour la mise en œuvre du procédé selon l'invention ;

la figure 2 est une vue en coupe longitudinale d'un réacteur chromatographique composant l'installation schématisée à la figure 1 ;

la figure 3 est un diagramme des temps des cycles opératoires pour la marche en continu de l'installation de la figure 1 et comprenant trois réacteurs chromatographiques.

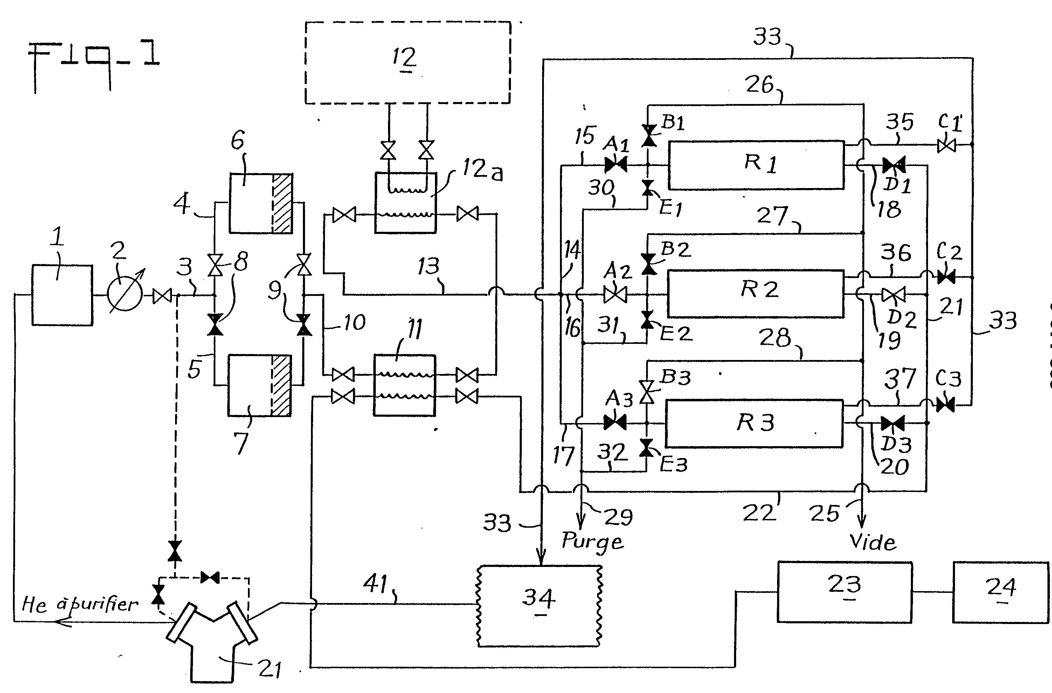

On se reporte d'abord à la figure 1 du dessin qui donne un schéma de réalisation d'une installation d'épuration de l'hélium selon l'invention.

Le mélange de gaz devant être épuré, par exemple un gaz respiratoire ayant été utilisé en plongée profonde, est stocké dans un réservoir 1. La pression de travail de la phase d'adsorption étant de l'ordre de 15 bars, le mélange gazeux soutiré du réservoir 1 est mis à cette pression au moyen d'un détendeur 2, ou est aspiré dans une bâche souple dont il sera question plus loin au moyen d'un compresseur $2_1$.

Le compresseur $2_1$ est, de préférence, du type à membrane métallique afin de ne pas polluer le mélange de gaz.

Ledit mélange capté à la sortie du détendeur 2 est envoyé par des tubulures 3/4/5/ dans une unité de pré-traitement composée de deux filtres 6/7 comprenant un adsorbant et/ou un absorbant, isolés par deux jeux de vannes 8/9. Ces filtres, qui sont du type à remplissage perdu, sont montés en parallèle pour fonctionner alternativement et répondre au processus de marche en continu de l'installation. Pour une marche en discontinu, l'installation ne comprendrait qu'un seul filtre. Les filtres 6/7 sont destinés à retenir irréversiblement l'eau, le gaz carbonique et les composés organiques lourds. Le mélange gazeux traversant ces filtres est mis au contact d'un charbon actif pour retenir les mercaptans et autres impuretés organiques, d'un catalyseur du type platine/alumine pour transformer le CO en $CO_2$ et de chaux sodée pour retenir le gaz carbonique.

A la sortie 10 de l'unité de filtration 6/7, le mélange de gaz se compose d'hélium + $O_2$ + $N_2$ + A ... Le pourcentage d'hélium est de l'ordre de 80 %.

Le mélange issu de ladite unité 6/7 à la température ambiante de l'ordre de 20/25° traverse un économiseur 11 et est envoyé dans un refroidisseur 12a, relié à un groupe frigorifique 12, pour être mis à la température de travail de la phase d'adsorption, cette température étant de préférence de − 25 °C.

La phase d'adsorption est commandée successivement selon un cycle continu dans trois réacteurs chromatographiques R1/R2/R3.

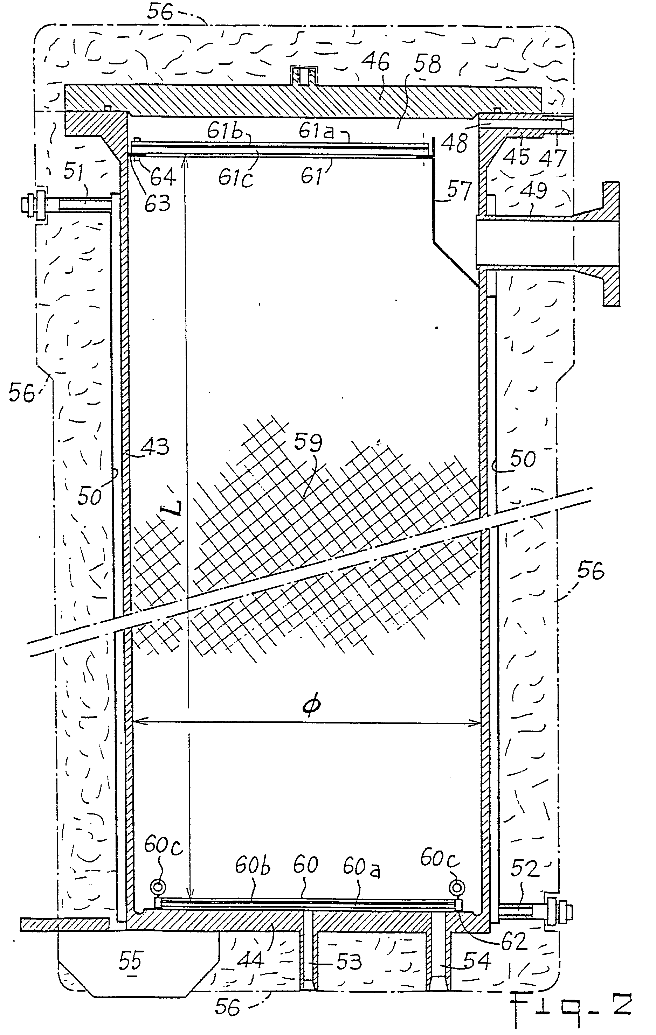

Le mélange issu à basse température du refroidisseur 12a est amené dans un collecteur 14 relié à l'entrée desdits réacteurs par des piquages 15/16/17. Les réacteurs R1/R2/R3, dont un mode de réalisation sera donné plus loin en référence à la figure 2, comportent un adsorbant constitué par un charbon micro-poreux dont les pores sont de dimensions inférieures ou égales à 2 nanomètres. Les tubulures de sorties 18/19/20 des réacteurs R1/R2/R3 sont reliées à un collecteur 21.

L'hélium épuré, issu desdits réacteurs, est envoyé, par la tubulure 22, à travers l'économiseur 11 pour le remettre à la température ambiante qui est de l'ordre de 15 °C et est repris par un surpresseur 23 pour être stocké dans un autre réservoir 24 à une pression pouvant varier entre 0 et 200 bars.

Les réacteurs comportent des vannes A, situées sur les tubulures 15/16/17 et D sur les tubulures 18/19/20 permettant de les isoler au cours du processus cyclique d'épuration.

L'installation comporte encore trois circuits dont une tubulure de vide 25, reliée à une pompe à vide (non représentée), reliée d'autre part à l'entrée des réacteurs par des tubulures 26/27/28 et isolée par des vannes B ; une tubulure de purge 29, reliée à l'entrée des réacteurs par des piquages 30/31/32 et isolée par des vannes E et une tubulure 33, débouchant dans une bâche souple 34, et reliée à la sortie des réacteurs à des piquages 35/36/37 et isolée par des vannes C.

La bâche souple 34 est reliée au réservoir I de stockage de mélange de gaz impur par une tubulure 41 sur le circuit de laquelle est inséré le compresseur $2_1$.

Un mode de réalisation des réacteurs R1/R2/R3 est illustré à la figure 2 du dessin. Chacun d'eux se présente sous la forme d'une tour cylindrique et comporte une virole 43 formant la paroi latérale de la tour, laquelle se termine à son extrémité inférieure par un fond 44 et à sa partie supérieure par une bride 45 sur laquelle est fixé, au moyen de goujons et d'écrous, un couvercle 46. La bride comporte à sa périphérie un piquage radial 47 se prolongeant par un conduit 48 qui débouche dans le réacteur et par lequel est admis le mélange de gaz à épurer.

Le réacteur comporte, à sa partie supérieure et au-dessous de la bride 45, un piquage 49 par lequel s'effectue la mise sous vide. Ledit réacteur comporte sur sa hauteur une double enveloppe 50 avec deux tubulures d'entrée et de sortie 51/52 haute et basse pour la mise en circulation d'un fluide caloporteur permettant d'une part de maintenir le réacteur à la température d'adsorption et d'autre part de conditionner l'adsorbant en vue de lui redonner ses performances d'adsorption maximales.

Le fond 44 comporte deux piquages 53/54. L'hélium épuré s'écoule par le piquage 53, l'autre piquage 54 est destiné à réaliser la phase de décompression. Le fait de décomprimer par le fond de l'appareil permet d'optimiser au maximum la capacité d'adsorption du charbon microporeux.

Le réacteur est porté par des piètements 55 répartis à 120° à sa partie inférieure.

L'ensemble est calorifugé par une enveloppe 56.

Le réacteur comporte à l'intérieur et à sa partie supérieure un déflecteur 57, situé devant la tubulure 49, lequel déflecteur réserve avec le couvercle 46 un espace 58.

L'adsorbant 59 est constitué, de préférence, par un charbon micro-poreux dont les pores sont de dimensions inférieures ou égales à 2 nm, lequel charbon 59 est inséré entre deux grilles 60/61.

La grille 60 est circulaire, recouvre les piquages 53/54 et repose par son poids et sous l'effet de l'adsorbant micro-poreux sur le fond 44 par l'intermédiaire d'un joint 62.

Cette grille se compose d'une tôle perforée 60a, laquelle est recouverte par un tamis 60b dont la maille est de 0,25 mm.

Des anneaux de levage 60c sont prévus pour sa manutention.

La grille 61 est située à la partie supérieure du réacteur et à une distance proche du couvercle 46 et est fixée sur un support généralement circulaire 63, soudé à la virole 43 et au déflecteur 57, au moyen de boulons 64.

Cette grille se compose d'une tôle perforée 61a, d'un tamis 61b, à mailles de 0,25 mm et d'une plaque de feutre 61c destinée à répartir le mélange gazeux sur l'adsorbant. La tôle perforée 61a insère le tamis 61b et le feutre 61c, lequel est au contact du support circulaire 63.

Pour un rendement optimum du réacteur, et selon l'invention, le diamètre interne $\varnothing$ doit être

au plus le tiers de la distance L séparant les grilles 60/61. Cette disposition assure une diffusion régulière du fluide à travers l'adsorbant 59.

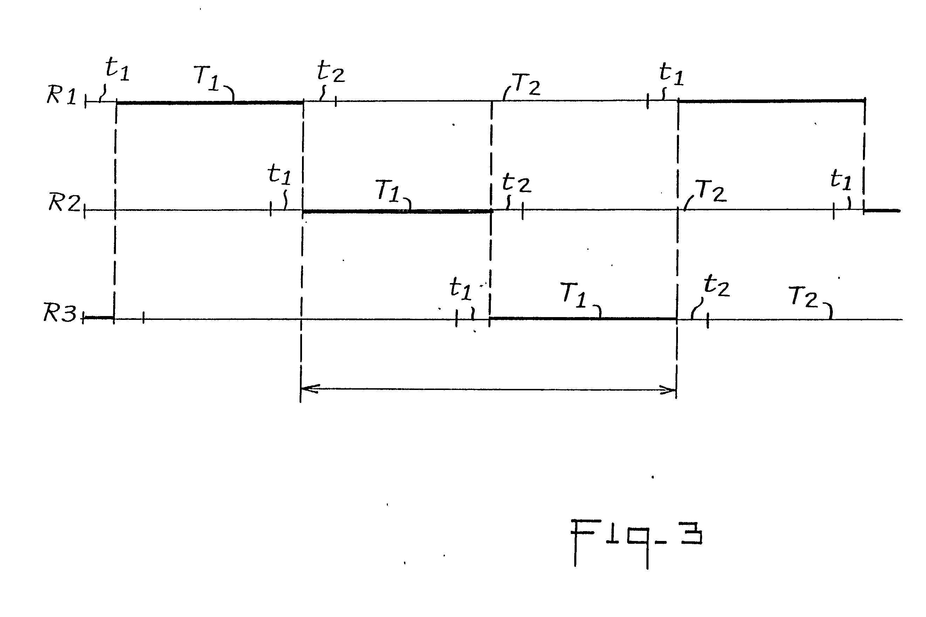

Le processus opératoire de l'installation selon l'invention pour une marche en continu est maintenant décrit en référence au schéma de la figure 1 et au diagramme de la figure 3.

A la mise en route et périodiquement environ une fois par mois, on « conditionne » les réacteurs R1/R2/R3 par chauffage sous vide à haute température (150 à 200 °C) pour éliminer l'encrassement des adsorbants. Les réacteurs sont ensuite remis à basse température (− 15/− 25 °C) pour retrouver les conditions opératoires.

Le mélange gazeux issu du réservoir 1 est préalablement amené à la pression de travail qui est de préférence 12 à 15 bars par le détendeur 2, ou par le compresseur $2_1$ qui aspire dans la bâche souple 34. Le mélange passe successivement dans l'unité de pré-traitement 6/7 et dans le dispositif de refroidissement constitué par l'économiseur 11 et le refroidisseur 12a.

A a) On ouvre la vanne A1 et on pressurise le réacteur R1 avec le mélange de gaz pendant un temps $t_1$, par exemple cinq minutes.

b) Au terme de cette phase de pressurisation, on poursuit la phase d'adsorption en faisant circuler le mélange de gaz dans le réacteur R1 par ouverture de la vanne D1.

Les vannes B1, C1, E1 sont fermées.

On maintient l'adsorption pendant une période $T_1$ de l'ordre de trente minutes.

c) Au terme de l'adsorption, on décomprime le mélange de gaz pendant un temps $t_2$, de l'ordre de cinq minutes, préalablement on ferme les vannes A1 et D1 ; on ouvre la vanne C1 et on chasse dans la bâche 34 le gaz riche en hélium en le décomprimant jusqu'à atteindre une pression de l'ordre de 3 bars.

Dès qu'on a atteint cette pression, on ferme la vanne C1 ; on ouvre la vanne E1 et on purge l'appareil à l'atmosphère pour rejeter les impuretés $O_2$, $N_2$ et A contenues dans le mélange.

d) Au terme de la phase de décompression, on ferme la vanne E1, on ouvre la vanne B1 et on crée une dépression dans le réacteur R1 que l'on maintient pendant une période $T_2$, de l'ordre de cinquante minutes pour régénérer l'adsorbant.

e) Au terme de cette phase de régénération, on comprime le mélange de gaz pendant un temps $t_1$, de l'ordre de cinq minutes, et le cycle se poursuit sur le réacteur R1.

B a) Simultanément et avant le terme de la phase d'adsorption Ab) du réacteur R1, on pressurise le réacteur R2 par l'ouverture de la vanne A2 pendant un temps $t_1$, de l'ordre de cinq minutes, qui se termine avec la fin de la phase d'adsorption du réacteur R1 ; les vannes B2/C2/E2 sont fermées.

b) On ouvre la vanne D2 et on maintient l'adsorption pendant une période $T_1$, de l'ordre de trente minutes en faisant circuler le gaz sur l'adsorbant.

c) Au terme de l'adsorption, on décomprime le mélange de gaz pendant un temps $t_2$, de l'ordre de cinq minutes.

Les vannes A2 et D2 sont préalablement fermées. On ouvre la vanne C2 et l'on chasse dans la bâche 34 le gaz riche en hélium en le décomprimant jusqu'à atteindre une pression voisine de 3 bars. Dès que cette pression est atteinte, on ferme la vanne C2, on ouvre la vanne E2 et on purge le réacteur à l'atmosphère pour rejeter les impuretés résiduelles $O_2$, $N_2$, A ...

d) Au terme de la phase de décompression, on ferme la vanne E2, on ouvre la vanne B2 et on met le réacteur R2 en dépression, laquelle est maintenue pendant un temps $T_2$, de l'ordre de cinquante minutes pour régénérer l'adsorbant.

e) Au terme de la phase de régénération de l'adsorbant du réacteur R2, on comprime le mélange de gaz pendant un temps $t_1$, de l'ordre de cinq minutes et le cycle se poursuit sur le réacteur R2.

C a) Simultanément et avant le terme de la phase d'adsorption Bb), on ouvre la vanne A3 et on pressurise le réacteur R3 pendant un temps $t_1$, de l'ordre de cinq minutes, cette opération se terminant avec la fin de la phase d'adsorption du réacteur R2. Les vannes B3, C3, E3, sont fermées.

b) On ouvre la vanne D3 et on maintient l'adsorption pendant une période $T_1$, de l'ordre de trente minutes.

c) A la fin de l'adsorption, on décomprime le mélange de gaz pendant un temps $t_2$, de l'ordre de cinq minutes. Les vannes A3, D3 sont préalablement fermées. On ouvre la vanne C3 et on chasse dans la bâche 34 une partie du mélange de gaz riche en hélium en le décomprimant jusqu'à atteindre une pression voisine de 3 bars. Dès que cette pression est atteinte, on ferme la vanne C3, on ouvre la vanne E3 et on purge le réacteur R3 à l'atmosphère pour rejeter les impuretés résiduelles $N_2$, $O_2$, A ...

d) Au terme de la phase de décompression, on ferme la vanne E3, on ouvre la vanne B3 et on met le réacteur R3 en dépression, opération qui est maintenue pendant un temps $T_2$, de l'ordre de cinquante minutes pour régénérer l'adsorbant.

e) A la fin de la phase de régénération de l'adsorbant du réacteur R3, on comprime le mélange de gaz pendant un temps $t_1$ de l'ordre de cinq minutes et le cycle se poursuit sur le réacteur R3.

Le cycle opératoire de l'installation est organisé pour que les phases d'adsorption Bb) du réacteur R2 et Cb) du réacteur R3, chacune d'une durée $T_1$ de l'ordre de trente minutes, se produisent successivement dans le même temps au cours duquel se produisent les opérations Ac) de décompression du mélange gazeux d'une durée $t_2$ de l'ordre de cinq minutes ; Ad) de régénération de l'adsorbant d'une durée $T_2$ de l'ordre de cinquante minutes et Ae) de compression dudit mélange d'une durée $t_1$ de l'ordre de cinq minutes, effectuées sur le réacteur R1.

L'ensemble des opérations d'ouverture et de fermeture des vannes A, B, C, D, E est géré par un dispositif à microprocesseurs.

Pour une installation dont les réacteurs sont d'un diamètre interne $\emptyset = 600$ mm et d'une hauteur entre grilles de 2017,5 mm, le débit du mélange traité est de 25 m³/heure.

Le rendement de l'installation est en relation directe avec la pureté de l'hélium obtenu à la sortie des réacteurs. Par exemple, pour un rendement R de 90 %, on obtient 99 % de pureté, pour un rendement R de 95 %, 95 % de pureté, et cela pour une impureté totale maximum à l'entrée de 20 %.

## Revendications

1. Procédé d'épuration de l'hélium contenu dans un mélange de gaz mettant en œuvre une unité de prétraitement (6/7) pour retenir les impuretés telles que l'eau, le gaz carbonique ou les composants organiques lourds et au moins un réacteur (R1/R2/R3) du type chromatographique situé en aval de ladite unité de prétraitement (6/7), caractérisé par les opérations suivantes :

a) on ajuste la pression du mélange de gaz jusqu'à obtenir la pression de travail de la phase d'adsorption, cette pression étant comprise entre 12 et 15 bars ;

b) on envoie le mélange de gaz dans le réacteur (R1/R2/R3) et on le fait passer à travers un adsorbant constitué par un charbon micro-poreux dont les pores sont de dimensions inférieures ou égales à 2 nanomètres ;

c) on amène la température dudit mélange à la sortie de ladite unité de prétraitement (6/7) jusqu'à ce qu'elle se situe dans la fourchette comprise entre $- 15\,°C$ et $- 35\,°C$, de préférence $- 25\,°C$ et,

d) après la phase d'adsorption, on commande la décompression du mélange de gaz par mise à l'atmosphère du réacteur (R1/R2/R3) au terme de laquelle phase de décompression, on crée une dépression dans ledit réacteur jusqu'à atteindre un vide inférieur ou égal à 1,33 millibar pour régénérer le charbon micro-poreux.

2. Procédé selon la revendication 1, caractérisé en ce que d'abord, on décomprime la quantité résiduelle de mélange de gaz contenu dans le réacteur (R1/R2/R3) jusqu'à atteindre une pression comprise entre 1 et 5 bars, de préférence 3 bars et au cours de cette décompression, on envoie le mélange de gaz dans un réservoir de stockage et ensuite, après avoir atteint cette pression, on purge le réacteur (R1/R2/R3) pour rejeter à l'atmosphère la quantité de mélange trop riche en impuretés, puis on fait le vide dans le réacteur (R1/R2/R3).

3. Procédé selon l'une quelconque des revendications 1 et 2, mettant en œuvre trois réacteurs (R1/R2/R3) reliés entre eux et pouvant être mis séparément en communication avec les autres appareillages de l'installation ou être isolés desdits appareillages par des vannes (A/B/C/D/E/) pour une épuration en continu de l'hélium, caractérisé, pour un cycle opératoire, par les opérations suivantes :

A a) on pressurise le réacteur (R1) avec le mélange de gaz mis à ladite pression de travail pendant un temps $t_1$ ;

b) au terme de cette phase de pressurisation, on poursuit la phase d'adsorption en faisant circuler le mélange de gaz dans le réacteur (R1) et l'on maintient l'adsorption pendant une période $T_1$ ;

c) au terme de la phase d'adsorption, on décomprime le mélange de gaz pendant un temps $t_2$ ;

d) au terme de la phase de décompression, on crée une dépression dans le réacteur (R1) que l'on maintient pendant une période $T_2$ pour régénérer le charbon micro-poreux ;

e) au terme de la phase de régénération, on recommence un nouveau cycle en comprimant le mélange de gaz à ladite pression de travail pendant un temps $t_1$.

B a) Simultanément et avant le terme de la phase d'adsorption Ab) du réacteur (R1), on comprime le mélange de gaz à ladite pression de travail pendant un temps $t_1$ qui se termine avec la fin de la phase d'adsorption dudit réacteur (R1) ;

b) au terme de cette phase de compression, on poursuit la phase d'adsorption en envoyant le mélange de gaz dans le réacteur (R2) et l'on maintient l'adsorption pendant une période $T_1$ ;

c) on effectue ensuite les opérations Ac) ; Ad) ; Ae) sur le réacteur (R2) de la même façon que sur le réacteur (R1).

C a) Simultanément et avant le terme de la phase d'adsorption Bb) du réacteur (R2), on comprime le mélange de gaz à ladite pression de travail pendant un temps $t_1$ qui se termine avec la phase d'adsorption dudit réacteur (R2) ;

b) au terme de cette phase de compression, on poursuit la phase d'adsorption en envoyant le mélange de gaz dans le réacteur (R3) et l'on maintient l'adsorption pendant une période $T_1$ ;

c) on effectue ensuite les opérations Ac) ; Ad) ; Ae) sur le réacteur (R3) de la même façon que sur le réacteur (R1) ;

— les phases d'adsorption Rb) du réacteur (R2) et Cb) du réacteur (R3) se produisant successivement dans le même temps au cours duquel se produisent les opérations Ac) de décompression du mélange gazeux ; Ad) de régénération du charbon micro-poreux ; et Ae) de compression dudit mélange effectuées sur le réacteur (R1) ;

— et on poursuit le processus avec les trois réacteurs (R1/R2/R3).

4. Procédé selon la revendication 3, caractérisé en ce que :

A a) on pressurise le réacteur (R1) avec le mélange de gaz mis à ladite pression de travail pendant un temps $t_1$ de l'ordre de cinq minutes ;

b) au terme de cette phase de pressurisation, on poursuit la phase d'adsorption en faisant circuler le mélange de gaz dans le réacteur (R1) et l'on maintient l'adsorption pendant une période $T_1$, de l'ordre de trente minutes ;

c) au terme de la phase d'adsorption, on décomprime le mélange de gaz pour atteindre une pression de l'ordre de 1 à 5 bars, de préférence 3 bars, pendant un temps $t_2$, de l'ordre de cinq minutes ;

d) au terme de la phase de décompression, on crée une dépression dans le réacteur (R1) que l'on maintient pendant une période $T_2$ de l'ordre de cinquante minutes pour régénérer le charbon micro-poreux ;

e) au terme de la phase de régénération, on recommence un nouveau cycle en comprimant le mélange de gaz à ladite pression de travail pendant un temps $t_1$, de l'ordre de cinq minutes.

B a) Simultanément et avant le terme de la phase d'adsorption Ab) du réacteur (R1), on comprime à ladite pression de travail le mélange de gaz pendant un temps $t_1$, de l'ordre de cinq minutes, qui se termine avec la fin de la phase d'adsorption dudit réacteur (R1) ;

b) au terme de cette phase de compression, on poursuit la phase d'adsorption en envoyant le mélange de gaz dans le réacteur (R2) et l'on maintient l'adsorption pendant une période $T_1$, de l'ordre de trente minutes ;

c) on effectue ensuite les opérations Ac) ; Ad) ; Ae) sur le réacteur (R2) de la même façon que sur le réacteur (R1).

C a) Simultanément et avant le terme de la phase d'adsorption Bb) du réacteur (R2), on comprime à ladite pression de travail le mélange de gaz pendant un temps de l'ordre de cinq minutes qui se termine avec la phase d'adsorption dudit réacteur (R2) ;

b) au terme de cette phase de compression, on poursuit la phase d'adsorption en envoyant le mélange de gaz dans le réacteur (R3) et l'on maintient l'adsorption pendant une période $T_1$, de l'ordre de trente minutes ;

c) on effectue ensuite les opérations Ac) ; Ad) ; Ae) sur le réacteur (R3) de la même façon que sur le réacteur (R1) ;

— les phases d'adsorption Bb) du réacteur (R2) et Cb) du réacteur (R3) se produisant successivement dans le même temps au cours duquel se produisent les opérations Ac) de décompression du mélange gazeux ; Ad) de régénération du charbon micro-poreux ; et Ae) de compression dudit mélange effectuées sur le réacteur (R1) ;

— et on poursuit le processus avec les trois réacteurs (R1/R2/R3).

5. Installation pour l'épuration de l'hélium contenu dans un mélange de gaz respiratoire hyperbare comportant une unité de pré-traitement comprenant au moins un filtre (6/7) contenant un adsorbant et/ou un absorbant dont la sortie est reliée à l'entrée d'au moins un réacteur chromatographique (R1/R2/R3) à la sortie duquel l'hélium purifié est envoyé, par l'intermédiaire d'un surpresseur (23), dans une unité de stockage à haute pression (24), caractérisée en ce que le mélange de gaz comprimé, issu de l'unité de pré-traitement (6/7) est envoyé dans un dispositif échangeur comprenant un économiseur (11) et un refroidisseur (12a), lui-même relié à un groupe frigorifique 12, lequel dispositif est situé en aval de ladite unité de pré-traitement (6/7) et en amont dudit réacteur (R1/R2/R3) pour mettre le mélange de gaz à la température de travail de la phase d'adsorption, laquelle température est comprise dans la fourchette − 15 °C à − 35 °C, de préférence − 25 °C.

6. Installation selon la revendication 5, dont le réacteur chromatographique (R1/R2/R3) adopte la forme d'une tour cylindrique et comporte une grille inférieure (60) et une grille supérieure (61) qui délimitent avec la paroi de la tour l'adsorbant, caractérisée en ce que le diamètre interne ⌀ du réacteur (R1/R2/R3) est au plus le 1/3 de la distance qui sépare lesdites grilles (60/61).

**Claims**

1. Process for purifying helium contained in a gas mixture using a pretreatment unit (6/7) to retain impurities such as water, carbon dioxide or heavy organic components, and at least one reactor (R1/R2/R3) of the chromatographic type situated downstream of said pretreatment unit (6/7), characterized by the following steps :

a) adjusting the pressure of the gas mixture until the working pressure of the adsorbing phase is obtained, said pressure being between 12 and 15 bars ;

b) sending the gas mixture into the reactor (R1/R2/R3) and causing it to pass through an adsorbant constituted by a microporous coal of which the pores dimensions are less than or equal to 2 nanometers ;

c) bringing the temperature of said mixture to the exhaust of said pretreatment unit (6/7) until it reaches the range of between − 15 °C and − 35 °C, preferably − 25 °C, and

d) after the adsorption phase, the decompression of the gas mixture is controlled by airing the reactor (R1/R2/R3) after said decompression phase, a depression is created inside said reactor until a vacuum less than or equal to 1.33 millibar is reached to regenerate the microporous coal.

2. Process according to claim 1, characterized in that first, the residual quantity of gas mixture contained in the reactor (R1/R2/R3) is decompressed until a pressure between 1 and 5 bars, preferably 3 bars, is obtained, and during said decompression, sending the gas mixture into a storing tank and thereafter, when said pressure has been reached, draining the reactor (R1/R2/R3) to reject into the atmosphere the quantity of mixture containing excess impurities, then a vacuum is created in the reactor (R1/R2/R3).

3. Process according to any one of claims 1 and 2, using three reactors (R1/R2/R3) connected together and adapted to be each connected to the other apparatus of the installation, or to be isolated therefrom by valves (A/B/C/D/E) for a continuous purification of helium, characterized, for an operating cycle, by the following operations of :

A a) pressurizing the reactor (R1) with the gas mixture at said working pressure for a time $t_1$;

b) at the end of said pressurization phase, continuing the adsorption phase by causing the gas mixture to circulate inside the reactor (R1) and the adsorption is maintained for a period of time $T_1$;

c) at the end of the adsorption phase, decompressing the gas mixture for a time $t_2$;

d) at the end of the decompression phase, creating a depression inside the reactor (R1) which is maintained for a period of time $T_2$ to regenerate the microporous coal;

e) at the end of the regeneration phase, starting a new cycle by compressing the gas mixture at said working pressure for a time $t_1$.

B a) Simultaneously and before the end of the adsorption phase Ab) of the reactor (R1), compressing the gas mixture at said working pressure for a time $t_1$ which ends with the end of the adsorption phase of said reactor (R1);

b) at the end of said compression phase, continuing the adsorption phase by sending the gas mixture into the reactor (R2) and the adsorption is carried out for a period of time $T_1$;

c) carrying out operations Ac ; Ad ; Ae on the reactor (R2) in the same manner as that on the reactor (R1).

C a) Simultaneously and before the end of the adsorption phase (Bb) of the reactor (R2), compressing the gas mixture at said working pressure for a time $t_1$ which· ends with the adsorption phase of said reactor (R2);

b) at the end of said compression phase, continuing the adsorption phase by sending the gas mixture into the reactor (R3) and the adsorption is carried out for a period of time $T_1$;

c) carrying out operations Ac ; Ad ; Ae on the reactor (R3) in the same manner as that on the reactor (R1);

— the adsorption phase Bb) of the reactor (R2), and Cb) of the reactor (R3) occurring successively at the same time as the operations Ac) of decompression of the gaseous mixture ; Ad) of regeneration of the microporous coal ; and Ae) of compression of said mixture, conducted on the reactor (R1), occur.

— carrying out the process with the three reactors (R1/R2/R3).

4. Process according to claim 3, characterized in that,

A a) the reactor (R1) is pressurized with the gas mixture brought so said working pressure for a time $t_1$ of about five minutes;

b) at the end of said pressurization phase, the adsorption phase is continued by causing the gas mixture to circulate in the reactor (R1) and the adsorption is continued for a period of time $T_1$, of about thirty minutes;

c) at the end of the adsorption phase, the gas mixture is decompressed to reach a pressure of about 1 to 5 bars, preferably 3 bars, for a time $t_2$ of about five minutes;

d) at the end of the decompression phase, a depression is created in the reactor (R1) which is kept for a period of time $T_2$ of about fifty minutes to regenerate the microporous coal;

e) at the end of the regeneration phase, a new cycle is begun by compressing the gas mixture at said working pressure for a time $t_1$, of about five minutes.

B a) Simultaneously and before the end of the adsorption phase Ab) of the reactor (R1), the gas mixture is compressed at said working pressure for a time $t_1$, of about five minutes, and ends with the end of the adsorption phase of said reactor (R1);

b) at the end of said compression phase, the adsorption phase is carried out by sending the gas mixture into the reactor (R2) and the adsorption is maintained for a period of time $T_1$, of about thirty minutes;

c) operations Ac); Ad); Ae) are then carried out on the reactor (R3) in the same manner as on reactor (R1);

C a) Simultaneously and before the end of the adsorption phase Bb) of reactor (R2), the gas mixture is compressed at said working pressure for a period of time of about five minutes and ends with the adsorption phase of said reactor (R2);

b) at the end of said compression phase, the adsorption phase is continued by sending the gas mixture into reactor (R3) and the adsorption is maintained for a period of time $T_1$, of about thirty minutes;

c) operations Ac); Ad); Ae) are then carried out on the reactor (R2);

— the adsorption phase Bb) of the reactor (R2), and Cb) of reactor (R3) occuring successively at the same time as the operations Ac) of decompression of the geseous mixture ; Ad) of regeneration of the microporous coal ; and Ae) of compression of said mixture conducted on the reactor (R1), occur;

— the process is continued with the three reactors (R1/R2/R3).

5. Installation for purifying helium contained in a mixture of hyperbaric respiratory gas comprising a pretreatment unit with at least one filter (6/7) containing an adsorbant and/or an absorbant of which the output is connected to the input of at least one chromatographic reactor (R1/R2/R3), at the output of which the purified helium is transmitted, via a booster (23), into a storing unit at high pressure (24), characterized in that the mixture of compressed gas, issuing from the pretreatment unit (6/7) is sent into an exchanging device comprising a saving device (11) and a cooler (12a), the latter being connected to a refrigerating unit (12), said device is situated downstream of said pretreatment unit (6/7) and upstream of said reactor (R1/R2/R3) to bring the gas mixture at the working temperature of the adsorption phase, said temperature being between − 15 °C and − 35 °C, preferably − 25 °C.

6. Installation according to claim 5, of which the chromatographic reactor (R1/R2/R3) takes the shape of a cylindrical tower and comprises a lower grate (60) and an upper grate (61) which define, together with the tower wall, the adsorbant, characterized in that the internal diameter $\emptyset$ of the reactor (R1/R2/R3) is at the most one third of the distance separating said grates (60/61).

**Patentansprüche**

1. Verfahren zum Reinigen von in einer Gasmischung enthaltenem Helium unter Verwendung einer Vorbehandlungseinheit (6/7) zum Zurückhalten von Verunreinigungen, wie Wasser, Kohlensäuregas oder schweren organischen Verbindungen, und mindestens eines nach der Vorbehandlungseinheit (6/7) befindlichen Reaktors (R1/R2/R3) des Chromatographtyps, gekennzeichnet durch die folgenden Verfahrensstufen :

a) man stellt den Druck der Gasmischung bis zum Erreichen des Arbeitsdrucks der Adsorptionsphase ein, wobei dieser Druck zwischen 12 und 15 bar liegt ;

b) man bringt die Gasmischung in den Reaktor (R1/R2/R3) und läßt sie durch ein Adsorbens, bestehend aus mikroporöser Kohle mit Poren einer Dimension von kleiner oder gleich 2 nm, strömen ;

c) man bringt die Temperatur der Mischung am Ausgang der Vorbehandlungseinheit (6/7) auf einen Bereich zwischen − 15 °C und − 35 °C, vorzugsweise − 25 °C ; und

d) man steuert nach der Adsorptionsphase die Dekompression der Gasmischung durch unter Atmosphäresetzen des Reaktors (R1/R2/R3), am Ende welcher Dekompressionsphase man einen Unterduck bis zum Erreichen eines Vakuums von weniger oder gleich 1,33 mbar zwecks Regeneration der mikroporösen Kohle im Reaktor schafft.

2. Verfahren nach Anspruch 1, dadurch gekennzeichnet, daß man zuerst die Restmenge an im Reaktor (R1/R2/R3) enthaltener Gasmischung bis zum Erreichen eines Drucks zwischen 1 und 5 bar, vorzugsweise 3 bar, dekomprimiert, und daß man im Verlauf dieser Dekompression die Gasmischung in einen Lagerbehälter bringt und man dann nach Erreichen dieses Drucks den Reaktor (R1/R2/R3) zwecks Verwerfens der mit Verunreinigungen stark angereicherten Mischungsmenge an die Atmosphäre spült, worauf man im Reaktor (R1/R2/R3) das Vakuum herstellt.

3. Verfahren nach einem der Ansprüche 1 und 2 unter Verwendung von drei miteinander verbundenen Reaktoren (R1/R2/R3), welche separat mit den anderen Apparaturen der Anlage in Verbindung gesetzt oder durch Ventile (A/B/C/D/E) von diesen getrennt werden können, zum kontinuierlichen Reinigen von Helium, pro Verfahrenszyklus gekennzeichnet durch die folgenden Verfahrensstufen :

A a) man setzt den Reaktor (R1) mit der auf Arbeitsdruck gebrachten Gasmischung während eines Zeitraums $t_1$ unter Druck ;

b) man setzt am Ende der Druckphase mit der Adsorptionsphase fort, indem man die Gasmischung im Reaktor (R1) zirkulieren läßt, und man hält die Adsorption während einer Zeitdauer $T_1$ aufrecht ;

c) man dekomprimiert am Ende der Adsorptionsphase die Gasmischung während eines Zeitraums $t_2$ ;

d) man schafft am Ende der Dekompressionsphase einen Unterdruck im Reaktor (R1), den man während einer Zeitdauer $T_2$ zwecks Regeneration der mikroporösen Kohle aufrechthält ;

e) man beginnt am Ende der Regenerationsphase einen neuen Zyklus, indem man die Gasmischung auf den Arbeitsdruck während eines Zeitraums $t_1$ komprimiert.

B a) Gleichzeitig mit und vor Ende der Adsorptionsphase A-b) des Reaktors (R1) komprimiert man die Gasmischung auf den Arbeitsdruck während eines Zeitraums $t_1$, der mit dem Ende der Adsorptionsphase des Reaktors (R1) aufhört ;

b) man setzt am Ende dieser Kompressionsphase mit der Adsorptionsphase fort, indem man die Gasmischung in den Reaktor (R2) leitet, und man hält die Adsorption während eines Zeitraums $T_1$ aufrecht ;

c) man führt anschließend die Verfahrensstufen A-c) ; A-d ; A-e) am Reaktor (R2) in gleicher Weise wie am Reaktor (R1) aus.

C a) Gleichzeitig mit und vor Ende der Adsorptionsphase B-b) des Reaktors (R2) komprimiert man die Gasmischung auf den Arbeitsdruck während eines Zeitraums $t_1$, welcher mit der Adsorptionsphase des Reaktors (R2) endet ;

b) man setzt am Ende dieser Kompressionsphase mit der Adsorptionsphase fort, indem man die Gasmischung in den Reaktor (R3) leitet, und man hält die Adsorption während eines Zeitraums $T_1$ aufrecht ;

c) man führt anschließend die Verfahrensstufen A-c) ; A-d) ; A-e) am Reaktor (R3) in gleicher Weise wie am Reaktor (R1) aus ;

— wobei die Adsorptionsphasen B-b) des Reaktors (R2) und C-b) des Reaktors (R3) nacheinander zur selben Zeit vor sich gehen, zu der die Verfahrensstufen A-c) der Dekompression der Gasmischung ; A-d) der Regeneration der mikroporösen Kohle ; und A-e) der Kompression der Mischung im Reaktor (R1) stattfinden ;

— und man setzt den Prozeß mit den drei Reaktoren (R1/R2/R3) fort.

4. Verfahren nach Anspruch 3, dadurch gekennzeichnet, daß man

A a) den Reaktor (R1) mit der Gasmischung während eines Zeitraums $t_1$ im Bereich von 5 min unter den Arbeitsdruck setzt ;

b) am Ende dieser Phase des unter Drucksetzens mit der Adsorptionsphase fortsetzt, indem man die Gasmischung im Reaktor (R1) zirkulieren läßt, und die Adsorption während einer Zeitdauer $T_1$ im Bereich von 30 min aufrechthält ;

c) am Ende der Adsorptionsphase die Gasmischung zum Erreichen eines Drucks im Bereich von 1 bis 5 bar, vorzugsweise 3 bar, während eines Zeitraums $t_2$ im Bereich von 5 min dekomprimiert ;

d) am Ende der Dekompressionsphase einen Unterdruck im Reaktor (R1) herstellt, den man während einer Zeitdauer $T_2$ im Bereich von 50 min zwecks Regeneration der mikroporösen Kohle aufrechthält ;

e) am Ende der Regenerationsphase einen neuen Zyklus beginnt, indem man die Gasmischung während eines Zeitraums $t_1$ im Bereich von 5 min auf den Arbeitsdruck komprimiert.

B a) Gleichzeitig mit und vor Ende der Adsorptionsphase A-b) des Reaktors (R1) die Gasmischung während eines Zeitraums $t_1$ im Bereich von 5 min auf den Arbeitsdruck komprimiert, welcher mit dem Ende der Adsorptionsphase des Reaktors (R1) aufhört ;

b) am Ende dieser Kompressionsphase mit der Adsorptionsphase fortsetzt, indem man die Gasmischung in den Reaktor (R2) leitet, und die Adsorption während einer Zeitdauer $T_1$ im Bereich von 30 min aufrechthält ;

c) anschließend die Verfahrensstufen A-c) ; A-d) ; A-e) am Reaktor (R2) auf die gleiche Weise wie am Reaktor (R1) ausführt.

C a) Gleichzeitig mit und vor Ende der Adsorptionsphase B-b) des Reaktors (R2) die Gasmischung während eines Zeitraums im Bereich von 5 min auf den Arbeitsdruck komprimiert, welcher mit der Adsorptionsphase des Reaktors (R2) endet ;

b) am Ende dieser Kompressionsphase mit der Adsorptionsphase fortsetzt, indem man die Gasmischung in den Reaktor (R3) einleitet, und die Adsorption während eines Zeitraums $T_1$ im Bereich von 30 min aufrechthält ;

c) anschließend die Verfahrensstufen A-c) ; A-d) ; A-e) am Reaktor (R3) in gleicher Weise wie am Reaktor (R1) ausführt ;

— wobei die Adsorptionsphasen B-b) des Reaktors (R2) und C-b) des Reaktors (R3) nacheinander zur selben Zeit vor sich gehen, zu der die Verfahrensstufen A-c) der Dekompression der Gasmischung ; A-d) der Regeneration der mikroporösen Kohle ; und A-e) der Kompression der Mischung im Reaktor (R1) stattfinden ;

— und den Prozeß mit den drei Reaktoren (R1/R2/R3) fortsetzt.

5. Anlage zum Reinigen von in einer hyperbaren Atemgasmischung enthaltenem Helium, mit einer Vorbehandlungseinheit, die mindestens einen ein Adsorbens und/oder ein Absorbens enthaltenden Filter (6/7) umfaßt und deren Ausgang an den Eingang von mindestens einem Chromatographenreaktor (R1/R2/R3) angeschlossen ist, an dessen Ausgang das gereinigte Helium mittels eines Überdruckgeräts (23) in eine Hochdrucklagereinheit (24) gefördert wird, dadurch gekennzeichnet, daß die Druckgasmischung, von der Vorbehandlungseinheit (6/7) kommend, in eine Austauscheinrichtung mit einem Ekonomiser (11) und einem Kühler (12a) gefördert wird, welcher wiederum an eine Kühlgruppe (12) angeschlossen ist, welche Einrichtung sich nach der Vorbehandlungseinheit (6/7) und vor dem Reaktor (R1/R2/R3) befindet, um die Gasmischung auf die Arbeitstemperatur der Adsorptionsphase zu bringen, welche Temperatur im Bereich von $-15\,°C$ bis $-35\,°C$, vorzugsweise $-25\,°C$, liegt.

6. Anlage nach Anspruch 5, bei welcher der Chromatographenreaktor (R1/R2/R3) die Form eines zylindrischen Turms hat und einen unteren Rost (60) und einen oberen Rost (61) umfaßt, welche mit der Wand des Turms das Adsorbens umgrenzen, dadurch gekennzeichnet, daß der Innendurchmesser $\varnothing$ des Reaktors (R1/R2/R3) höchstens 1/3 des die Roste (60/61) trennenden Abstandes beträgt.

Fig_1

0 071 553

Fig-2

Fig-3

0 071 553